Europäisches Patentamt

European Patent Office

Office européen des brevets

(19)

(11) Publication number: **0 054 159**
**A2**

## (12) EUROPEAN PATENT APPLICATION

(21) Application number: **81109081.0**

(51) Int. Cl.³: **G 06 F 1/04**

(22) Date of filing: **28.10.81**

(30) Priority: **15.12.80 US 216373**

(43) Date of publication of application:
**23.06.82 Bulletin 82/25**

(84) Designated Contracting States:
**BE DE FR GB IT NL**

(71) Applicant: **BURROUGHS CORPORATION**
**Burroughs Place**
**Detroit, Michigan 48232(US)**

(72) Inventor: **Shima, George Tomomitsu**
**1-10-32 Komachi**
**Kamakura-shi Kanagawa-ken(JP)**

(74) Representative: **Eisenführ & Speiser**
**Martinistrasse 24**
**D-2800 Bremen 1(DE)**

(54) **Programmable timing pulse generator.**

(57) This disclosure relates to a programmable timing pulse generator which employs a memory in which plurality different sequences of timing signals can be stored, which sequences can be programmably accessed to achieve any set of timing signals as might be required by the system. This readily allows the circuit designer to create a system in which certain timing signals may be required at particular intervals but not at regular intervals, and also allows the designer to create a system in which the rate at which the timing signals are generated can be readily changed by merely accessing a different portion of the memory in which the timing signals are stored.

Fig. 1

-1-

TITLE

PROGRAMMABLE TIMING PULSE GENERATOR

BACKGROUND OF THE INVENTION

Field of the Invention

This invention relates to a timing pulse generator, and more particularly to such a generator employing a programmable memory.

Description of the Prior Art

Early prior art timing generators employed delay lines having distributed time constants for the purpose of deriving sub-clock signals. The disadvantage of such structures was in the designing of the lengths of the delay lines to achieve the required time displacement between adjacent pulses of the sub-clock signals. Furthermore, such delay line circuits were subject to load variations which resulted in pulse distortions. Other structures employed for the generation of timing signals employed ring counters and decoding matrices which were easier to design but still required internal loops between the latches from which they were formed.

Other types of counters used for the generation of timing signals employed either straight binary counters or so-called Johnson-type counters, the outputs of which were decoded by decoding circuitry to achieve the appropriate timing signals since such counters are, in essence, real time clocks.

A particular problem with all of the prior art timing circuits has been that once the circuit has been designed, the timing signals generated cannot be readily changed, although they might be delayed and, in certain instances, inhibited.

Perhaps one of the greatest contributions to improvements in data processing and digital circuitry has been the advancement in components and, more particularly, in integrated circuits. Integrated circuits can now by formed in the size of a silicon chip less than a quarter inch square, which chip can nevertheless employ thousands and eventually hundreds of thousands of gates, and this is particularly advantageous in forming large scale memories, either RAM's or ROM's.

One of the first advances in decoding circuitry was made by Maurice V. Wilkes when he postulated a decoder for a digital computer which was formed of a core matrix wherein selected nodes of the matrix were provided with the core cross-connection so that, for any given set of incoming signals, a desired set of output signals could be generated, (See Wilkes, "The Best Way to Design an Automatic Calculating Machine", Report of Manchester University Computer Inaugural Conference, July 1951, p. 16). With the advancement of integrated circuitry, such core matrices are now created in the form of ROM's which again can have tens of thousands of gates to accommodate an extremely large number of boolean

operations to be performed in the sense that the incoming signals are merely an address to a particular location in the ROM or RAM at which are stored the desired combination of output signals required. Wilkes' original design led to the concept of microprogramming as a means of decoding computer instructions., (See Faber et al U.S. Patent No. 3,983,539 or Ferguson et al U.S. Patent No. 3,886,523). However, this concept has been employed for addition, subtraction, and multiplication through the use of tables in the form of such matrices or memories, (See Gerace, "Microprogrammed Control for Computing Systems", IEEE Transactions on Electronic Computers, December, 1963 at p. 742). This concept now has advanced to what is today referred to in many circles as stored logic and structural firmware as well as control firmware. This in turn has given the computer designer greater flexibility in the designing of the various functions that he wishes the circuitry to perform. This technique can also be applied to timing pulse generators.

By employing this technique for timing pulse generators, any number of combinations of timing signals can be generated as might be required. For example, if it is desired to increase the data rate of a given channel, a new sequence of timing pulses can be selected which doubles that rate. In addition, such a technique allows for the design of a system wherein timing pulses are required for a certain function but are not required at regular intervals.

It is, then, an object of the present invention to provide an improved timing pulse generator.

It is another object of the present invention to provide an improved timing generator which can be programmed to achieve a great variety of different functions.

It is still another object of the present invention to provide an improved timing pulse generator with which the output timing pulses can be easily changed as might be required.

SUMMARY OF THE INVENTION

In order to achieve the above-identified objects, the present invention is directed toward a memory in which a plurality of different sequences of timing signals can be stored, which sequences can be programmably accessed to achieve any set of timing signals as might be required by the system. In this manner, timing signals for certain activities can be increased to increase the speed of those activities. Correspondingly, if certain timing signals are not required at regular intervals, a different sequence of signals can be generated without the unrequired signals.

A feature, then, of the present invention resides in the memory in which are stored different sequences of timing signals, which memory can be programmably accessed to achieve any desired sequence of timing signals.

BRIEF DESCRIPTION OF THE DRAWINGS

The above and other objects, advantages and features will become more readily apparent from a review of the following specification when taken in conjunction with the drawings wherein:

Figure 1 is a schematic diagram of a system employing the present invention; and

Figures 2A-2C are various sets of waveforms representing different implementations of the present invention.

## GENERAL DESCRIPTION OF THE INVENTION

The advent of large scale and very large scale integrated circuits (LSI and VLSI) has resulted in the ready availability of ROM's and programmable logic arrays (PLA's) which provide the circuit designer with great flexibility in achieving a particular circuit function that may be desired. PLA's can be considered as consisting of a string of AND and OR gates custom configured to produce a specified output for a specified input. In another sense, a PLA can be viewed as a particular type of ROM in the sense that it may take the form of a matrix of crosspoints where such crosspoints are either connected or left open at the time of manufacture and in some cases can even be programmed or altered in the field after manufacture. As was indicated above, this capability has been employed by computer designers in the past not only to implement microprogramming or control firmware to decode macro or assembly-type instructions, but also to implement various types of arithmetic and logic operations as might be required by a particular system. In the present invention, the preferred embodiment employs ROM's or PROM's although it could employ PLA's.

In order to achieve the above-described objects, advantages and features, the present invention is directed toward a programmable system for generating timing pulses so as to control variation in computing speed as well as memory access.

With the employment of ROM's or PLA's one avoids the necessity for "hard-wired" circuit elements that cannot be readily changed to achieve different timing signals as did prior art timing generators of the delay line type, the ring counters and other types of counters. With such a memory type generator, as many different sequences of timing signals can be stored as the size of the memory will allow. In order to change any given signals, only the address to the memory need be changed.

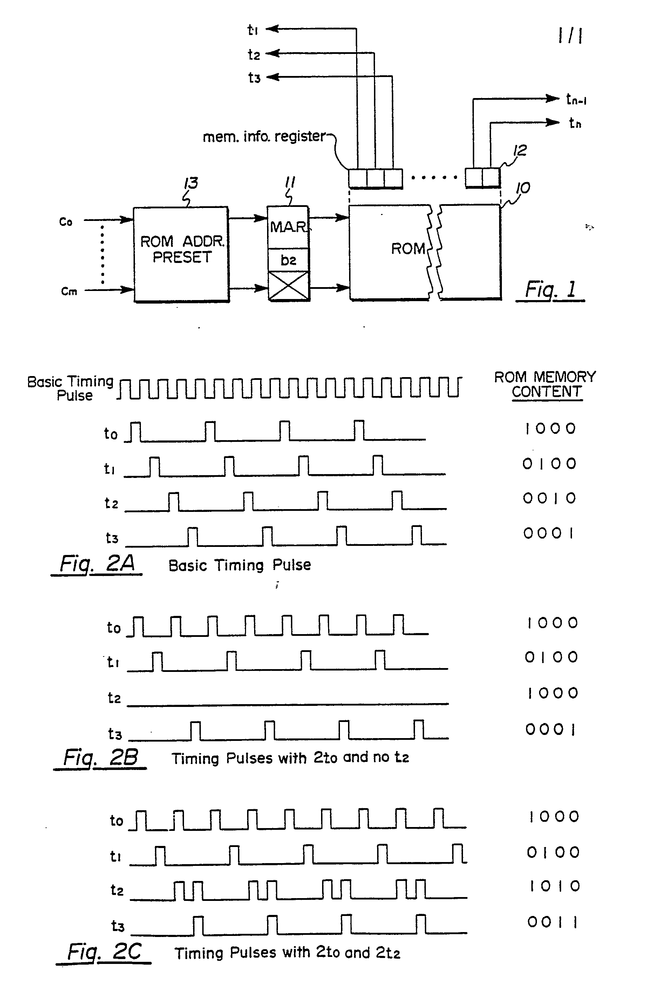

In the present invention, the preferred embodiment employs either a read-only memory (ROM or PROM) or a random access memory (RAM). The basic configuration of the preferred embodiment is illustrated in Figure 1 and contains ROM 10 which is addressed by memory address register 11 and which is read out of by way of memory information register 12. Memory register 12 is of a sufficient number of bits in width to accommodate the various types of timing signals $t_0, \ldots, t_n$ as might be required to control the system in which the present invention is employed. The lower portion of memory address register 11 is a counter which will cycle through a count of n corresponding to the n timing pulses to be generated. Additional bits in memory address register such as bit $b_2$ are provided for reasons that will be more thoroughly described below. These additional bits as well as the rest of the memory address register are employed to select different blocks within ROM 10 to achieve different sequence of timing signals as will be more thoroughly described. Memory address register 11 is addressed by way of ROM address preset 13 which in turn is activated by a plurality of signals $c_0 \ldots c_m$ which represent different conditions that are employed to determine the setting of memory address register 11.

Examples of how the present invention might be employed will now be given in relation to Figures 2A-2C. Referring to Figure 2A, timing signals are illustrated which would be typical for such a system where $t_0$ would occur at

one clock time, $t_1$ would occur at the next clock time, $t_2$ would occur at the third clock time, and $t_3$ would occur at the fourth clock time. To this end, memory address register 11 of Figure 1 would be loaded with the address of 000000 and at that location it would find the ROM memory content as illustrated at the right side of Figure 2A of 1 0 0 0. At the next clock time, memory address register 11 of Figure 1 would be incremented to the next location where it would find the memory content 0 1 0 0 and so forth until, at the fourth location, it would find the memory address content 0 0 0 1 where the first significant bit represents the clock time $t_0$, the second significant bit of the memory content represents the clock time $t_1$, and so forth. At the end of this cycle, the counter which makes up the lower portion of memory address register 11 would recycle and the sequence of clock times would be repeated as illustrated in the waveforms of Figure 2A.

However, if it were desired to vary the sequence of timing pulses such as illustrated in Figure 2B where the timing sequence would be $t_0$, $t_1$, $t_0$, $t_3$, then the $b_2$ term of memory address register 11 of Figure 1 would be set which would have the effect of addressing a different portion of the ROM where the sequence of timing signals would be one in which there were two $t_0$'s and no $t_2$. As the memory locations were sequenced, the contents of the memory would be as illustrated in the table to the right hand side of Figure 2B.

In a similar manner, by presetting memory address register 11 with a different memory address, still a different portion of ROM 10 could be addressed, for example, to achieve a series of timing pulses where there were two $t_0$'s and two $t_2$'s in addition to the normal sequence of $t_1$'s and $t_3$'s. At this new sequence of locations in the ROM memory, the memory contents would be as illustrated in the table to the right of Figure 2C with the result that the respective timing pulses $t_0, ..., t_3$ would be as illustrated in the waveforms of Figure 2C.

With the employment of the present invention, it becomes possible to generate any number of combinations of timing signals as might be required for a given system. An application of this invention might be where each timing pulse performs a certain function, but may not be required at regular intervals. If such timing pulses are not used for one function, they can be employed for other purposes which might speed up the operation of the system. For example, if separate timing pulses were used for two data communication channels and their accesses to a memory, the idle condition of one of the timing pulses would not speed up the other data channel even though the memory and data channel could handle the increased data rate. This is true especially where timing pulses are transmitted with the data for synchronization purposes.

However, with the present invention, the transmission rate could be increased such as was illustrated with timing pulse $t_2$ in Figure 2C to drive the one data channel at twice its rate. The program and/or the circuitry may automatically do this by changing addressing of the ROM as was described above. Since timing pulses are sent for synchronizing purposes, there should be no problem in the data transmission. Furthermore, memory could be used more frequently, thus increasing its efficiency.

With the present invention it is also possible to send bursts of timing pulses before a future action is to take place. For example, eight pulses may be employed to perform a shifting function in a shift register and a ninth pulse (on a different transmission line) could then be used to transfer the contents of the shift register to another register. This would mean that a shift counter would not be necessary. A whole host of different functions can be performed with the concept of the present invention.

All of the above advantages of the present invention are achieved through the employment of ROM's or some form of memory to create the timing pulse generators that are programmable in the sense that one need only change the sequence of addresses to the memory in order to change the sequences of the timing signals. Such a programmable timing pulse generator avoids the problems of prior art generators which, once designed and implemented in fixed "hard-wired" circuitry could not be changed readily, although they might be provided with additional circuitry to either delay or inhibit such timing pulses. In this sense, the present invention is similar to other so-called stored logic or structural firmware type of circuits.

## EPILOGUE

A programmable timing pulse generator has been described above which employs a memory in which plurality different sequences of timing signals can be stored, which sequences can be programmably accessed to achieve any set of timing signals as might be required by the system. This readily allows the circuit designer to create a system in which certain timing signals may be required at particular intervals but not at regular intervals, and also allows the designer to create a system in which the rate at which the timing signals are generated can be readily changed by merely accessing a different portion of the memory in which the timing signals are stored.

While but one embodiment of the present invention has been described above, it will be apparent to those skilled in the art that variations and modifications may be made therein without departing from the spirit and the scope of the invention as claimed.

WHAT IS CLAIMED IS:

1.      A timing pulse generator comprising:
        a programmable array of circuit elements to generate different sets of sequences of timing pulses; and
        accessing means coupled to said programmable array to access said array to generate a selected set of sequences of timing pulse signals.

2.     A timing pulse generator according to Claim 1 further including:

a single crystalline substrate in which said array and accessing means is formed.

3.     A timing pulse generator according to Claim 1 wherein:

said programmable array is a memory formed of a matrix of storage elements.

4.     A timing pulse generator according to Claim 3 wherein:

said memory is a read-only memory.

5.     A timing pulse generator according to Claim 1 wherein:

said accessing means includes a counter to supply said programmable array with a sequence of accessing signals to generate said selected set of sequences of timing pulse signals.

6.     A timing pulse generator according to Claim 5 further including:

means to supply different addresses to said accessing means to generate different sets of sequences of signals in programmable array.

7.　　　In a digital circuit formed in an integrated circuit substrate, a timing pulse generator comprising:

a programmable memory matrix of storage elements to store different sets of sequences of timing pulses;

accessing means coupled to said programmable memory matrix to access a selected set of sequences of timing pulse signals; and

an output register coupled to said memory matrix to receive said timing pulses in a sequence for transmission to said digital circuit.

8.      A timing pulse generator according to Claim 7
wherein:

said memory is a read-only memory.


9.      A timing pulse generator according to Claim 7
wherein:

said accessing means includes a counter to
supply said programmable matrix with a sequence of
accessing signals to generate said selected set of
sequences of timing pulse signals.


10.     A timing pulse generator according to Claim 9
further including:

means to supply different addresses to said
accessing means to generate different sets of sequences
of signals from said memory matrix.

$t_1$ ←

$t_2$ ←

$t_3$ ←

→ $t_{n-1}$

→ $t_n$

mem. info. register

13

11

12

10

$C_o$

ROM ADDR. PRESET

MAR

$b_2$

ROM

$C_m$

*Fig. 1*

Basic Timing Pulse

ROM MEMORY CONTENT

$t_o$     1 0 0 0

$t_1$     0 1 0 0

$t_2$     0 0 1 0

$t_3$     0 0 0 1

*Fig. 2A*    Basic Timing Pulse

$t_o$     1 0 0 0

$t_1$     0 1 0 0

$t_2$     1 0 0 0

$t_3$     0 0 0 1

*Fig. 2B*    Timing Pulses with $2t_o$ and no $t_2$

$t_o$     1 0 0 0

$t_1$     0 1 0 0

$t_2$     1 0 1 0

$t_3$     0 0 1 1

*Fig. 2C*    Timing Pulses with $2t_o$ and $2t_2$